# FASCICULE DE BREVET EUROPEEN

(11) **EP 1 868 954 B1**
(45) Date de publication et mention de la délivrance du brevet: **17.09.2008**
(21) Numéro de dépôt: 06726293.1
(22) Date de dépôt: 31.03.2006
(51) Int. Cl.: C03C 25/42, C03C 25/26, C03C 25/34, C03C 13/00, C03C 25/14

(54) **LAINE MINERALE, PRODUIT ISOLANT ET PROCEDE DE FABRICATION**
MINERALWOLLE, ISOLIERPRODUKT UND HERSTELLUNGSVERFAHREN
MINERAL WOOL, INSULATING PRODUCT AND PRODUCTION METHOD

(30) Priorité: 01.04.2005 FR 0550860
(43) Date de publication de la demande: 26.12.2007
(73) Titulaire: SAINT-GOBAIN ISOVER, 92400 Courbevoie (FR)
(72) Inventeur: BERNARD, Jean-Luc, 60600 Clermont (FR); DOUCE, Jérôme, 75010 Paris (FR)
(74) Mandataire: Teyssedre, Laurent
(86) Numéro de dépôt international: PCT/FR2006/050280
(87) Numéro de publication internationale: WO 2006/103375

(56) Documents cités:
- EP-B- 1 265 821
- US-A- 5 658 836

## Description

La présente invention concerne le domaine des laines minérales artificielles. Elle vise plus particulièrement les laines minérales destinées à fabriquer des matériaux d'isolation thermique et/ou acoustique ou des substrats de culture hors sol et notamment des laines minérales stables thermiquement, destinées à des applications où la capacité de résister en température est importante.

Ces laines minérales sont susceptibles de jouer un rôle important dans la résistance au feu de systèmes constructifs auxquels elles sont intégrées.

Elle s'intéresse plus particulièrement aux laines minérales du type laine de roche, c'est-à-dire dont les compositions chimiques entraînent une température de liquidus élevée et une grande fluidité à leur température de fibrage, associées à une température de transition vitreuse élevée.

Conventionnellement, ce type de laine minérale est fibré par des procédés de centrifugation dits "externes", par exemple du type de ceux utilisant une cascade de roues de centrifugation alimentées en matière fondue par un dispositif de distribution statique, comme décrit notamment dans les brevets EP-0 465 310 ou EP-0 439 385.

Le procédé de fibrage par centrifugation dit "interne", c'est-à-dire ayant recours à des centrifugeurs tournant à grande vitesse et percés d'orifices, est par contre conventionnellement réservé au fibrage de laine minérale de type laine de verre, schématiquement de composition plus riche en oxydes alcalins et à faible taux d'alumine, de température de liquidus moins élevée et de viscosité à température de fibrage plus grande que la laine de roche. Ce procédé est notamment décrit dans les brevets EP-0 189 354 ou EP-0 519 797.

Il a cependant été récemment mis au point des solutions techniques permettant d'adapter le procédé de centrifugation interne au fibrage de laine de roche, notamment en modifiant la composition du matériau constitutif des centrifugeurs et leurs paramètres de fonctionnement. On pourra pour plus de détails à ce sujet se reporter notamment au brevet WO 93/02977. Cette adaptation s'est révélée particulièrement intéressante au sens qu'elle permet de combiner des propriétés qui n'étaient jusque-là inhérentes qu'à l'un ou l'autre des deux types de laine, roche ou verre. Ainsi, la laine de roche obtenue par centrifugation interne est d'une qualité comparable à de la laine de verre, avec un taux d'infibrés moindre que de la laine de roche obtenue conventionnellement. Elle conserve cependant les deux atouts liés à sa nature chimique, à savoir un faible coût de matières chimiques et une tenue en température élevée.

Deux voies sont donc maintenant possibles pour fibrer de la laine de roche, le choix de l'une ou l'autre dépendant d'un certain nombre de critères, dont le niveau de qualité requis en vue de l'application visée et celui de faisabilité industrielle et économique.

A ces critères, s'est ajouté depuis quelques années celui d'un caractère biodégradable de la laine minérale, à savoir la capacité de celle-ci à se dissoudre rapidement en milieu physiologique, en vue de prévenir tout risque pathogène potentiel lié à l'accumulation éventuelle des fibres les plus fines dans l'organisme par inhalation.

En outre un nombre important d'application de laines minérales utilise la propriété remarquable de stabilité thermique que présentent certaines compositions de laines minérales. On connaît notamment la stabilité thermique des laines minérales obtenues à partir de basaltes ou de laitiers enrichis en fer.

La stabilité thermique des laines minérales est en particulier indispensable pour autoriser leur emploi dans des systèmes constructifs résistants au feu. Un des points clé de la résistance au feu réside dans la capacité du matelas de fibres à ne pas s'affaisser (et à ainsi conserver ses propriétés d'isolation thermique), cette capacité provenant du fait que les fibres ne subissent ni fluage ni frittage.

La demande de brevet WO 01/68546 décrit une laine minérale rendue stable thermiquement par l'emploi simultané d'une composition de verre particulière et d'un composé du phosphore susceptible de réagir à partir de 100°C avec les fibres pour former un revêtement réfractaire limitant à la fois le fluage et le frittage des fibres.

Les composés du phosphore décrits dans cette demande sont des phosphates ou polyphosphates, principalement d'ammonium ou de sodium. Ces composés, déposés avec le liant sur la surface des fibres, réagissent à partir de 100°C avec la surface des fibres en libérant des composés acides tels que l'acide phosphorique et/ou l'anhydride phosphorique, lesquels réagissent, compte tenu de la composition chimique particulière des fibres, avec les ions alcalino-terreux desdites fibres pour former à leur surface le revêtement réfractaire susmentionné.

Il est apparu que la mise en oeuvre de cette invention n'est pas sans présenter d'inconvénients à l'usage. Les phosphates décrits dans la demande WO 01/68546 sont assez sensibles d'une part à l'humidité (même à l'état de polyphosphates), et d'autre part à la température. La libération de composés acides à relativement basse température semble être préjudiciable à l'adhésion entre les fibres et le liant à base de résine (cette dernière étant polymérisée en étuve à des températures d'environ 200°C), et semble être à l'origine d'une diminution des propriétés mécaniques du produit fini et surtout de la stabilité desdites propriétés mécaniques à long terme.

La présente invention a donc pour but d'obvier aux inconvénients précités en améliorant la composition chimique des fibres que comprennent les laines minérales de type roche afin de leur conférer la capacité à être fibré par centrifugation interne, des propriétés mécaniques et de vieillissement améliorées, une bonne stabilité thermique, et de bonnes propriétés de solubilité en milieu physiologique.

L'invention a pour objet une laine minérale, stable thermiquement, susceptible de se dissoudre dans un milieu physiologique, qui comprend des fibres dont les constituants sont mentionnés, ci-après selon les pourcentages pondéraux suivants :

| | | | |
|---|---|---|---|
| SiO₂ | 35-60 %, | de préférence | 39-55 % |
| Al₂O₃ | 12-27 %, | -- | 16-25 % |
| CaO | 0-35 %, | -- | 3-25 % |
| MgO | 0-30 %, | -- | 0-15 % |
| Na₂O | 0-17 %, | -- | 6-12 % |
| K₂O | 0-17 %, | -- | 3-12 % |
| R₂O (Na₂O + K₂O) | 10-17 %, | -- | 12-17 % |
| P₂O₅ | 0-5 %, | -- | 0-2% |
| Fe₂O₃ | 0-20 %, | | |
| B₂O₃ | 0-8 %, | -- | 0-4 % |
| TiO₂ | 0-3%, | | |

et qui comprend également au moins un composé du phosphore dans une teneur, exprimée en masse d'atomes de phosphore, variant de 0,0005 %, notamment plus de 0,01 % à 1%, notamment moins de 0,5 % de la masse totale des fibres, susceptible de réagir à une température inférieure à 1000°C avec lesdites fibres pour former un revêtement à la surface desdites fibres, un composé du phosphore étant une molécule dans laquelle le ou les atome(s) de phosphore est (sont) lié(s) à au moins un atome de carbone, directement ou par le biais d'un atome d'oxygène.

De préférence, chaque composé du phosphore est une molécule dans laquelle le ou les atome(s) de phosphore est (sont) lié(s) à au moins un atome de carbone, directement ou par le biais d'un atome d'oxygène.

Au sens de la présente invention, on définit une laine minérale « stable thermiquement » ou « présentant une stabilité thermique » comme susceptible de présenter un caractère de résistance en température, c'est-à-dire susceptible de ne pas s'affaisser de manière substantielle quand elle est chauffée notamment jusqu'à des températures d'au moins 1000°C.

On considère notamment qu'une laine minérale est stable thermiquement si elle répond aux critères définis par le projet de norme " Matériaux isolants : stabilité thermique " (Insulating materials : Thermal stability) tel qu'il est proposé par NORDTEST (NT FIRE XX- NORDTEST REMISS N°1114-93).

Ce test définit une procédure pour déterminer la stabilité thermique d'un échantillon de matériau isolant à une température de 1000°C. Un échantillon de matériau isolant (notamment de 25 mm de hauteur et 25 mm de diamètre) est introduit dans un four qui permet l'observation de l'affaissement de l'échantillon en fonction de la température au contact de l'échantillon.

La température du four croît à 5°C par minute, à partir de la température ambiante, jusqu'à au moins 1000°C.

Ce projet de norme définit un matériau isolant comme stable thermiquement si l'échantillon de ce matériau ne s'affaisse pas de plus de 50% de son épaisseur initiale jusqu'à ce que la température de 1000°C soit atteinte.

Le revêtement formé à la surface des fibres à haute température a la propriété remarquable d'être réfractaire et retarde ainsi l'affaissement d'un échantillon de fibres, de la composition sélectionnée, porté à des températures pouvant atteindre 1000°C.

Le ou chaque composé du phosphore peut être une molécule unitaire, c'est-à-dire ne contenir qu'un atome de phosphore.

Le composé du phosphore selon l'invention peut alors être caractérisé en ce que l'unique atome de phosphore n'est lié directement qu'à des atomes d'oxygène ou d'hydrogène, c'est-à-dire n'est lié à au moins un atome de carbone que par le biais d'un atome d'oxygène. Il peut s'agir à titre d'exemple d'un mono-, di- ou tri-ester phosphorique, ou d'esters phosphoniques ou phosphiniques non-substitués, les groupes carbonés de ces esters étant des composés alkyles, aryles, acyles ou hydroxyalkyles, pouvant éventuellement être de nature oligomérique ou polymérique et/ou contenir un ou plusieurs hétéroatomes choisis parmi N, O ou S.

Il peut alternativement être caractérisé en ce que l'unique atome de phosphore est lié directement à au moins un atome de carbone. Il peut s'agir d'esters ou d'acides phosphoniques ou phosphiniques au moins partiellement substitués (c'est-à-dire dans lesquels au moins un des atomes d'hydrogènes liés à l'atome de phosphore est substitué par un substituant carboné). Le composé du phosphore peut également être dans ce cas un mono-, di- ou tri-oxyde de phosphine. Les différents groupes carbonés de ces composés sont des composés alkyles, aryles, acyles ou hydroxyalkyles, pouvant éventuellement être de nature oligomérique ou polymérique et/ou contenir un ou plusieurs hétéroatomes choisis parmi N, O ou S.

Le ou chaque composé du phosphore selon l'invention est toutefois de préférence une molécule constituée de plusieurs composés unitaires tels que décrits précédemment, identiques ou différents, liés entre eux par des liaisons covalentes. Le composé du phosphore est alors de préférence une molécule oligomère ou polymère, c'est-à-dire que sa structure peut se représenter comme la répétition de motifs constitutifs. Le nombre de ces motifs constitutifs est avantageusement compris entre 2 et 100, notamment 2 et 50, voire entre 2 et 10. Dans le cas d'une molécule contenant plusieurs atomes de phosphore, la condition essentielle selon laquelle les atomes de phosphore sont liés à un atome de carbone doit se comprendre comme signifiant que la grande majorité des atomes de phosphore respectent cette condition, étant entendu que dans une grande molécule, le fait qu'une petite fraction des atomes de phosphore ne respectent pas cette condition n'est pas à même de modifier substantiellement la manière dont le problème technique est résolu.

Il peut ainsi être un composé dans lequel la majorité (voire la totalité) des atomes de phosphore sont liés entre eux par un atome d'oxygène, par exemple des composés du type polyester phosphorique ou phosphonique.

Il est cependant plus avantageux que la majorité (voire la totalité) des atomes de phosphore soient liés entre eux par l'intermédiaire d'une entité carbonée. Le composé du phosphore contient alors de préférence une majorité d'atomes de phosphore liés entre eux par un groupe comprenant au moins un atome de carbone, ce dernier pouvant être lié directement ou par le biais d'un atome d'oxygène à au moins un des atomes de phosphore. Un tel composé préféré peut être représenté selon la formule générale (1) suivante : 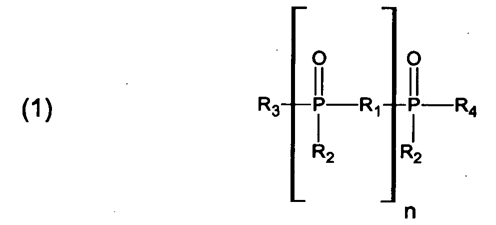 où
- n est compris entre 1 et 100, de préférence entre 1 et 50, notamment entre 2 et 10,
- les substituants R₁ à R₄ sont des entités majoritairement carbonées identiques ou différentes, de préférence du type alkyle, aryle, acyle ou hydroxyalkyle éventuellement ramifiés, pouvant éventuellement être de nature oligomérique ou polymérique et/ou contenir un ou plusieurs hétéroatomes choisis parmi N, O, S ou P. Il est préférable qu'au moins un de ces substituants, notamment le substituant R₁, contienne un atome d'oxygène lié à l'atome de phosphore de la chaîne principale.

Dans le cas où deux des substituants contiennent un atome d'oxygène lié à l'atome de phosphore de la chaîne principale, le composé du phosphore est avantageusement un oligomère ou un polymère du type polyester phosphonique de formule générale (2) suivante :

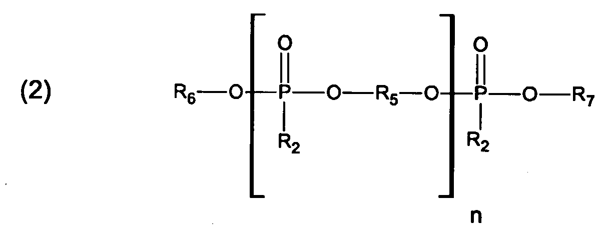

Lorsque tous les substituants contiennent un atome d'oxygène lié à l'atome de phosphore de la chaîne principale, une autre famille de composés du phosphore préférés est constituée par les polymères ou oligomères du type polyacide ou polyester phosphorique de formule générale (3) suivante :

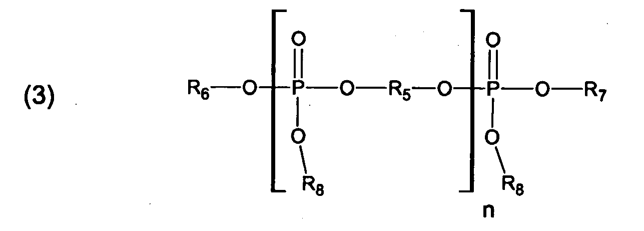

Pour ces deux derniers types de composés :
- la longueur n de la chaîne est comprise entre 1 et 100, de préférence entre 1 et 50, notamment entre 2 et 10.
- les substituants R₂ et R₅ à R₈ sont des entités majoritairement carbonées identiques ou différentes, de préférence du type alkyle, aryle, acyle ou hydroxyalkyle éventuellement ramifiés, pouvant éventuellement être de nature oligomérique ou polymérique et/ou contenir un ou plusieurs hétéroatomes choisis parmi N, O, S ou P. Le nombre d'atomes de carbone dans chaque substituant est avantageusement compris entre 1 et 15, notamment entre 2 et 10. Un grand nombre d'atomes de carbone a en effet pour inconvénient de générer une grande quantité de résidus carbonés lors d'une montée en température, tandis qu'un nombre d'atomes de carbone trop faible peut entraîner une hydrolyse trop aisée. Les substituants R₆ à R₈ peuvent également être des atomes d'hydrogène ou une base de neutralisation de l'acide phosphorique.

Lorsque la longueur n de la chaîne est égale à 1, il est possible que les groupes R₅ et R₆ soient liés entre eux de manière covalente, formant ainsi une molécule cyclique. Lorsque n est supérieur à 1, certains groupes R₅, R₆ ou R₇ peuvent être liés entre eux de manière covalente. Un composé du phosphore préféré est ainsi le produit commercialisé sous la marque AMGARD^{®} CT ou CU par la société Rhodia. Il s'agit d'un mélange des deux esters phosphoniques cycliques de numéros CAS respectifs 41203-81-0 et 42595-45-9. Le premier d'entre eux est un ester phosphonique selon la formule (2) avec n = 1, tous les groupes R₂ et R₇ étant des groupes méthyle, les groupes R₅ et R₆ étant liés entre eux pour former un groupe alkyle unique possédant 6 atomes de carbone. Le second est un ester du même type, avec toutefois n = 2, tous les groupes R₂ étant des groupes méthyle, les 2 groupes R₅ étant respectivement liés aux groupes R₆ et R₇ pour former deux groupes alkyles en C₆.

Les composés oligomériques ou polymériques du phosphore, présentés jusqu'ici sous forme de chaînes linéaires ou cycliques, peuvent également être des réseaux réticulés, les différents substituants majoritairement carbonés pouvant être eux-mêmes liés à au moins un autre atome de phosphore, par exemple lorsque ces substituants sont des polyols ou des polyacides.

Ces derniers composés peuvent être en particulier être obtenus par des réactions d'estérification ou de transestérification entre des acides ou esters respectivement phosphoniques et phosphoriques et des polyols (en particulier diols), des polyacides (en particulier diacides) ou encore des composés époxy. Dans ce cadre, la mélasse (sous-produit du raffinage du sucre) est une source de polyols ou diols particulièrement attractive de par son faible coût. Il est apparu que des composés du phosphore selon l'invention pouvaient être obtenus par réaction entre de la mélasse et des acides ou esters phosphoriques ou phosphoniques, cette réaction pouvant même se produire par pulvérisation simultanée des deux produits sur les fibres.

La laine minérale selon l'invention peut avantageusement comprendre un mélange de plusieurs composés du phosphore tels que décrits précédemment.

Le point commun à ces composés que l'on pourrait qualifier de « composés organophosphorés » est la présence de composés carbonés au sein même de la chaîne phosphorée, qui semble être à l'origine du « blocage » des composés acides, tels que l'acide phosphorique, pour des températures inférieures à 200°C et donc de la stabilité de ces composés contre les effets de la température et de l'humidité.

Le composé du phosphore selon l'invention est présent de préférence dans une teneur supérieure ou égale à 0,05%, notamment 0,1% et inférieure ou égale à 2%, notamment 1%. Cette quantité correspond à la masse de composés du phosphore ramenée à la masse totale des fibres.

Compte tenu de la masse de phosphore dans ce type de composés, la teneur massique en atomes de phosphore est comprise entre 0,0005% à 1%, notamment supérieure ou égale à 0,01% et même 0,1% et inférieure ou égale à 0,5%.

Le revêtement observé peut être continu sur la surface d'une fibre et son épaisseur est notamment comprise entre 0,01 et 0,05 µm. Des cristallisations d'une composition proche de celle du revêtement peuvent également être observées localement à la surface des fibres, et peuvent atteindre des épaisseurs de l'ordre de 0,1 à 0,5 µm.

Selon un mode de réalisation avantageux de l'invention, le revêtement susceptible de se former à la surface des fibres de la laine minérale est constitué essentiellement de phosphate d'alcalino-terreux.

On obtient ainsi des revêtements dont la composition est proche de celle des cristaux de types orthophosphate ou pyrophosphate d'alcalino-terreux dont le point de fusion est connu comme étant supérieur à 1000°C.

Avantageusement, le phosphate d'alcalino-terreux qui est susceptible de se former à la surface des fibres de la laine minérale est un phosphate de chaux.

Les phosphates de chaux, notamment orthophosphate (Ca₃(PO₄)₂, pyrophosphate (Ca₂P₂O₇) sont connus pour être réfractaires et ces composés ont des températures de fusion respectivement de 1670°C et 1230°C. Comme décrit dans la demande WO 01/68546, un effet coopératif est mis en évidence entre les fibres qui ont fait l'objet de la sélection de constituants ci-dessus et des composés du phosphore. On peut penser que le composé du phosphore libère à haute température (mais en dessous de 1000°C) de l'acide phosphorique et/ou de l'anhydride phosphorique qui commence à réagir avec les fibres de la composition selon l'invention. Dans le cas de ces compositions, le taux élevé d'alcalins qu'elles comprennent peut jouer un rôle de compensateur de charge de l'aluminium, également présent à des taux élevés. On aurait ainsi des compositions où la mobilité atomique des alcalino-terreux est supérieure à celle de ces éléments dans d'autres compositions de verre. Ces alcalino-terreux relativement mobiles, seraient alors susceptibles de réagir avec l'acide phosphorique ou l'anhydride phosphorique pour former un composé réfractaire, notamment un phosphate d'alcalino-terreux, et permettraient ainsi d'assurer une excellente stabilité thermique aux laines minérales selon l'invention.

On obtient ainsi des laines minérales susceptibles de se dissoudre en milieu physiologique et stables thermiquement.

Dans la suite du texte, on nommera " composition " les plages des constituants des fibres de la laine minérale, ou du verre destiné à être fibré pour produire lesdites fibres. Tout pourcentage d'un constituant de la composition doit se comprendre comme un pourcentage pondéral et les compositions selon l'invention peuvent comporter jusqu'à 5 %, notamment 3% de composés à considérer comme des impuretés non analysées, comme cela est connu dans ce genre de compositions.

Selon une variante de l'invention, la composition de la laine minérale se présente comme suit :

| | | | |
|---|---|---|---|
| SiO₂ | 39-55 %, | de préférence | 40-52 % |
| Al₂O₃ | 16-27 %, | -- | 16-25 % |
| CaO | 3-35 %, | -- | 25 % |
| MgO | 0-15 %, | -- | 0-10 % |
| Na₂O | 0-15 %, | -- | 6-12 % |
| K₂O | 0-15 %, | -- | 3-12 % |
| R₂O (Na₂O + K₂O) | 10-17 %, | -- | 12-17 % |
| P₂O₅ | 0-5 %, | -- | 0-2 % |
| Fe₂O₃ | 0-15 %, | | |
| B₂O₃ | 0-8 %, | -- | 0-4 % |
| TiO₂ | 0-3%, | | |

MgO étant compris entre 0 et 5 %, notamment entre 0 et 2 % lorsque R₂O ≤ 13,0 %.

La sélection d'une telle composition a permis de cumuler toute une série d'avantages, notamment en jouant sur les multiples rôles, complexes, que jouent un certain nombre de ses constituants spécifiques.

On a pu constater en effet que l'association d'un taux d'alumine élevé, compris entre 16 et 27 %, de préférence supérieur à 17 % et/ou de préférence inférieur à 25 %, notamment à 22 %, pour une somme d'éléments formateurs, silice et alumine, comprise entre 57 et 75 %, de préférence supérieur à 60 % et/ou de préférence inférieur à 72 %, notamment à 70 %, avec une quantité d'alcalins (R₂O : soude et potasse) élevée comprise entre 10 et 17 %, avec MgO compris entre 0 et 5 %, notamment entre 0 et 2 %, lorsque R₂O ≤ 13.0 %, permet d'obtenir des compositions de verre possédant la propriété remarquable d'être fibrables dans un vaste domaine de température et conférant un caractère biosoluble à pH acide aux fibres obtenues. Selon des modes de réalisation de l'invention, le taux d'alcalin est de préférence supérieur à 12 %, notamment à 13,0 % et même 13,3 % et/ou de préférence inférieur à 15 %, notamment inférieur à 14,5 %.

Ce domaine de compositions s'avère particulièrement intéressant car on a pu observer, que contrairement aux opinions reçues, la viscosité du verre fondu ne baisse pas significativement avec l'augmentation du taux d'alcalins. Cet effet remarquable permet d'augmenter l'écart entre la température correspondant à la viscosité du fibrage et la température de liquidus de la phase qui cristallise et ainsi d'améliorer considérablement les conditions de fibrage et rend notamment possible le fibrage en centrifugation interne d'une nouvelle famille de verres biosolubles.

Selon un mode de réalisation de l'invention, les compositions possèdent des taux d'oxyde de fer compris entre 0 et 5 %, notamment supérieur à 0,5 % et/ou inférieur à 3 %, notamment inférieur à 2,5 %. Un autre mode de réalisation est obtenu avec des compositions qui possèdent des taux d'oxyde de fer compris entre 5 et 12 %, notamment entre 5 et 8 %, ce qui peut permettre d'obtenir une tenue au feu des matelas de laines minérales.

Avantageusement, les compositions suivant l'invention respectent le ratio :
(Na₂O + K₂O)/Al₂O₃ ≥ 0,5 , de préférence (Na₂O + K₂O)/Al₂O₃ ≥ 0,6, notamment (Na₂O + K₂O)/Al₂O₃≥0,7 qui apparaît favoriser l'obtention d'une température à la viscosité de fibrage supérieure à la température de liquidus.

Selon une variante de l'invention, les compositions suivant l'invention ont de préférence un taux de chaux compris entre 10 et 25 %, notamment supérieur à 12 %, de préférence supérieur à 15 % et/ou de préférence inférieur à 23 %, notamment inférieur à 20 %, et même inférieur à 17 % associé à un taux de magnésie compris entre 0 et 5 %, avec de préférence moins de 2 % de magnésie, notamment moins de 1 % de magnésie et/ou un taux de magnésie supérieur à 0,3 %, notamment supérieur à 0,5 %.

Selon une autre variante, le taux de magnésie est compris entre 5 et 10 % pour un taux de chaux compris entre 5 et 15 %, et de préférence entre 5 et 10 %.

Ajouter du P₂O₅, qui est optionnel, à des teneurs comprises entre 0 et 3 %, notamment supérieur à 0,5 % et/ou inférieur à 2 %, peut permettre d'augmenter la biosolubilité à pH neutre. Optionnellement, la composition peut aussi contenir de l'oxyde de bore qui peut permettre d'améliorer les propriétés thermiques de la laine minérale, notamment en tendant à abaisser son coefficient de conductivité thermique dans la composante radiative et également augmenter la biosolubilité à pH neutre. On peut également inclure du TiO₂ dans la composition, de manière optionnelle, par exemple jusqu'à 3 %. D'autres oxydes tels que BaO, SrO, MnO, Cr₂O₃, ZrO₂, SO₃ peuvent être présents dans la composition, dans une teneur totale ne dépassant pas 5%, de préférence environ 3% ou 2%, et même 1%. Ces différents oxydes peuvent être ajoutés volontairement dans la composition selon l'invention, mais sont en général présents à titre d'impuretés inévitables provenant des matières premières, des matériaux réfractaires en contact avec le verre, ou des agents affinants employés pour diminuer la quantité d'inclusions gazeuses dans la masse de verre fondu.

Selon un mode de l'invention particulièrement préféré, la laine minérale comprend des fibres dont les constituants sont mentionnés ci-après, selon les pourcentages pondéraux suivants :

| | | |
|---|---|---|
| SiO₂ | 39-55%, | de préférence 40-52% |
| Al₂O₃ | 16-27%, | de préférence 16-26% |
| CaO | 6-20%, | de préférence 8-18% |
| MgO | 1-5%, | de préférence 1-4,9% |
| Na₂O | 0-15%, | de préférence 2-12% |
| K₂O | 0-15%, | de préférence 2-12% |
| R₂O (Na₂O + K₂O) | 10-14,7%, | de préférence 10-13,5% |
| P₂O₅ | 0-3%, | notamment 0-2% |
| Fe₂O₃ (fer total) | 1,5-15%, | notamment 3,2-8% |
| B₂O₃ | 0-2%, | de préférence 0-1% |
| TiO₂ | 0-2%, | de préférence 0,4-1 % |

Ces compositions présentent par elles-mêmes un comportement à très haute température remarquablement amélioré.

Il semblerait que ce domaine de composition permette de faire nucléer de germes de cristallisation à basses température, qui provoqueront l'apparition / la croissance de cristaux à une température suffisamment basse où le ramollissement ou le frittage du matériau n'a pas encore pu être effectif. On peut penser que, en faisant cristalliser des composants plus fusibles que la composition vitreuse globale, la viscosité du verre résiduel augmente et les forces de surface à l'oeuvre pour le frittage ne sont plus assez importantes pour l'emporter sur les forces de cohésion visqueuse.

De préférence, l'alumine est présente à raison de 17 à 25,5%, notamment 20 à 25%, en particulier de 21 à 24,5 % en poids, notamment de l'ordre de 22 à 23 ou 24% %.

Avantageusement, une bonne réfractarité peut être obtenue en ajustant la teneur en magnésie, notamment à au moins 1,5%, en particulier 2%, notamment supérieure ou égale à 2,5% ou 3 %. Une teneur élevée en magnésie est favorable à un effet cristallisant à basse température qui s'oppose à la baisse de viscosité généralement observée à température élevée, et empêche donc le frittage du matériau.

Une sélection de composition avantageuse consiste à prévoir une quantité minimale requise de magnésie d'autant plus grande que la quantité d'alumine est faible.

Ainsi, lorsque l'alumine est présente à raison d'au moins 22 % en poids, la quantité de magnésie est de préférence d'au moins 1%, avantageusement de l'ordre de 1 à 4 %, de préférence de 1 à 2%, en particulier de 1,2 à 1,6 %. La teneur en alumine est de préférence limitée à 25% pour conserver une température de liquidus suffisamment basse. Lorsque l'alumine est présente en plus faible quantité, par exemple de l'ordre de 17 à 22 %, la quantité de magnésie est de préférence d'au moins 2 %, notamment de l'ordre de 2 à 5%.

La chaux est avantageusement présente à des teneurs comprises entre 9,5 et 20%, de préférence entre 10 et 18%, et de manière encore plus préférée de 11 à 16 %.

La quantité totale de chaux et de magnésie peut être avantageusement de l'ordre de 14 à 20 %, notamment de 15 à 19%.

La quantité totale d'oxydes alcalino-terreux (chaux, magnésie, oxydes de baryum et de strontium) est de préférence comprise entre 10 et 20%, notamment de 12 à 18%.

La quantité de silice est avantageusement de l'ordre de 35 à 50% en poids, notamment 37 à 48%, plus particulièrement de 39 à 44%.

Selon des modes de réalisation de l'invention, le taux d'alcalin est de préférence inférieur ou égal à 13,2 % , voire à 13,0%, notamment de l'ordre de 10 à 12,5 %, en particulier 10,2 à 12% ou moins. La soude, comme la potasse, peuvent être chacune présente à raison de 3 à 9 %en poids.

Dans cette plage de teneurs en alcalins, il se révèle avantageux de choisir un rapport de proportions entre les alcalins et l'alumine, tel que le rapport molaire R₂O / Al₂O₃ est inférieur à 1, en particulier à 0,9, notamment d'au plus 0,8, en particulier d'au plus 0,75.

Lorsque le rapport molaire est supérieur à 0,9 , il est préférable que la teneur en magnésie soit suffisamment élevée pour produire un effet cristallisant à basse température, par exemple d'au moins 2%, ou d'au moins 2,5%, faute de quoi on obtiendrait des températures de transition vitreuse trop faibles, avec un effet néfaste sur le comportement à très haute température.

Un rapport molaire R₂O / Al₂O₃ inférieur à 0,9 produit un effet favorable sur la réfractarité , en particulier à basse température, donc sur le point de ramollissement et la température de frittage.

Dans ce domaine de compositions, on conserve néanmoins un écart suffisamment important entre la température correspondant à la viscosité du fibrage et la température de liquidus de la phase qui cristallise et ainsi de bonnes conditions de fibrage.

L'oxyde de fer présent dans la composition a un impact positif sur la nucléation ou la croissance de germes à basse température tout en limitant le liquidus. Cependant, sa quantité est de préférence limitée pour ne pas pénaliser la biosolubilité en milieu acide. Selon un mode de réalisation préférée de l'invention, les compositions possèdent des taux d'oxyde de fer compris entre 2 et 6 %, de préférence de l'ordre de 3 à 6%.

L'oxyde de titane procure un effet très sensible sur la nucléation à haute et à basse température de spinelles dans la matrice vitreuse. Une teneur de l'ordre de 1 % ou moins peut se révéler avantageuse.

P₂O₅ peut être utilisé, à des teneurs comprises entre 0 et 3 %, notamment entre 0,1 et 1,2 % pour augmenter la biosolubilité à pH neutre.

D'autres oxydes tels que BaO, SrO, MnO, Cr₂O₃, ZrO₂, peuvent être présents dans la composition, dans une teneur totale maximale de 5%, voire 2% et même 1%.

La différence entre la température correspondant à une viscosité de 10^{2,5} poises (decipascal.seconde), notée T_{log 2,5} et le liquidus de la phase qui cristallise, notée T_{Liq} est de préférence d'au moins 10°C. Cette différence, T_{log 2,5} - T_{Liq} définit le " palier de travail " des compositions de l'invention, c'est-à-dire, la gamme de températures dans laquelle on peut fibrer, par centrifugation interne tout particulièrement. Cette différence s'établit de préférence à au moins 20 ou 30°C, et même à plus de 50°C, notamment plus de 100°C.

Les compositions suivant l'invention ont des températures de transition vitreuse élevées, notamment supérieures à 600°C. Leur température d'annealing (notée T_{Annealing}, connue également sous le nom de "température de recuisson") est notamment supérieure à 600°C.

Les laines minérales, comme mentionnées plus haut, présentent un niveau de biosolubilité satisfaisant notamment à pH acide. Elles présentent ainsi généralement une vitesse de dissolution, notamment mesurée sur la silice, d'au moins 30, de préférence d'au moins 40 ou 50 ng/cm² par heure mesurée à pH 4,5 selon une méthode similaire à celle décrite dans la norme NF T 03-410.

Un autre avantage très important de l'invention a trait à la possibilité d'utiliser des matières premières bon marché pour obtenir la composition de ces verres. Ces compositions peuvent notamment résulter de la fusion de roches, par exemple du type des phonolites, avec un porteur d'alcalino-terreux, par exemple calcaire ou dolomie, complétés si nécessaire par du minerai de fer. On obtient par ce biais un porteur d'alumine à coût modéré.

Ce type de composition, à taux d'alumine et à taux d'alcalins élevés peut être avantageusement fondue dans des fours verriers à flamme ou à énergie électrique.

L'invention a également pour objet un procédé d'obtention des laines minérales selon l'invention, comprenant une étape de formage des fibres puis une étape d'apport, notamment par pulvérisation ou imprégnation d'une solution, d'au moins un composé du phosphore sur la surface desdites fibres.

L'invention a encore pour objet un produit d'isolation thermique et/ou phonique comprenant au moins une laine minérale selon l'invention.

L'invention concerne également l'utilisation de la laine minérale décrite ci-dessus dans des systèmes constructifs résistants au feu.

On appelle « systèmes constructifs résistants au feu » des systèmes, comprenant généralement des assemblages de matériaux, notamment à base de laine minérale et de plaques métalliques, susceptibles de retarder de manière efficace la propagation de la chaleur ainsi que d'assurer une protection aux flammes et gaz chauds et de conserver une résistance mécanique lors d'un incendie.

Des tests normalisés définissent le degré de résistance au feu, exprimé notamment comme le temps nécessaire pour qu'une température donnée soit atteinte du côté opposé du système constructif soumis à un flux de chaleur, dégagé par exemple par la flamme d'un brûleur ou un four électrique.

On considère qu'un système constructif présente une capacité à résister au feu satisfaisante, notamment s'il est susceptible de répondre aux exigences d'un des essais suivants :
- Test pour porte coupe-feu : essais sur plaques de fibres minérales tel que défini dans la norme allemande DIN 18 089 - Tell 1 (ou équivalent).
- Comportement au feu de matériau et d'éléments pour la construction tel que défini dans la norme allemande DIN 4102 (ou équivalent). On considère notamment la norme DIN 4102 - Teil 5 pour les tests en grandeur nature afin de déterminer la classe de résistance au feu, et/ou la norme DIN 4102 - Teil 8 pour les tests sur échantillons avec un petit banc d'essai.
- Test selon l'essai normalisé OMI A 754 (18) (ou équivalent) qui décrit les exigences générales de essais de résistance au feu pour les applications de type « marine », notamment les cloisonnements de bateaux. Ces essais sont pratiqués sur de échantillons de grande taille, avec de fours de 3 m par 3 m. On peut citer, par exemple, le cas d'un pont en acier où la performance requise dans le cas d'un feu côté isolant est de satisfaire le critère d'isolation thermique pendant au moins 60 minutes.

D'autres détails et caractéristiques avantageuses ressortent de la description ci-après de modes de réalisation préférés non limitatifs.

Le tableau 1 ci-après regroupe les compositions de fibres, en pourcentages pondéraux, de 60 exemples.

La ligne « impuretés » correspond aux impuretés inévitables provenant des matières premières, des agents affinants ou des matériaux réfractaires en contact avec le verre fondu, traitées globalement. Seule leur teneur totale est indiquée, ce à titre purement indicatif, car ni leur teneur, en général inférieure à 2%, voire à 1%, ni leur nature, n'affectent la manière dont les exemples selon l'invention résolvent le problème posé.

Les compositions selon ces exemples sont adaptées au fibrage par centrifugation interne, en particulier selon l'enseignement du brevet WO 93/02977 précité.

Leurs paliers de travail, définis par la différence T_{Log 2,5} - T_{Liq} sont largement positifs notamment supérieurs à 50°C, voire même 100°C, et même supérieurs à 150°C.

Les températures de liquidus sont peu élevées, notamment inférieures ou égales à 1200°C et même 1150°C.

Les températures correspondant à des viscosités de 10^{2,5} poises (T_{Log 2,5}) sont compatibles avec l'utilisation d'assiettes de fibrage haute température notamment dans les conditions d'usage décrites dans la demande WO 93/02977.

Les compositions préférées sont notamment celles où T_{Log 2,5} est inférieur à 1350°C, de préférence inférieur à 1300°C.

Le tableau 1 indique également la température d'annealing (exprimée en °C) et la vitesse de dissolution des fibres à pH 4,5 (exprimée en ng/cm².h). Cette dernière grandeur, mesurée selon le protocole indiqué dans la norme NF T 03-410, est supérieure à 30 ng/cm².h.

Pour illustrer la présente invention, différents composés du phosphore ont été ajoutés lors du processus de fibrage, par pulvérisation, dans une zone située après la zone d'étirage des fibres à partir du verre fondu, et avant la zone de réception de la laine minérale. On nomme " adjuvants ", les composés ajoutés dans cette zone de pulvérisation, lesquels adjuvants peuvent être apportés simultanément ou de manière séparée.

La composition de l'exemple 45 du tableau 1 a été fibrée par centrifugation interne en ou sans présence de divers composés à base de phosphore, pour obtenir des matelas de laine minérale et les résultats d'essais mécaniques et de stabilité thermique sont présentés dans le tableau 2.

Dans ces essais, l'adjuvant comprend un liant à base de résine et pour certains exemples un composé du phosphore ajouté à ce liant et pulvérisé en même temps que lui.

Les liants, à base de résine, bien connus dans le domaine des laines minérales, ont pour fonction de donner une résistance mécanique souhaitée au matelas de fibres. Dans le cadre des présents essais un liant standard à base de résine formo-phénolique et d'urée a été employé. D'autres types de compositions d'encollage, en particulier exemptes de formaldéhyde, peuvent bien entendu être également employées, seules ou en mélange. Il peut s'agir par exemple :
- de compositions à base de résine époxy du type éther glycidique et d'un durcisseur aminé non volatil (décrites dans la demande EP-A-0 369 848), pouvant également comprendre un accélérateur choisi parmi les imidazoles, les imidazolines et leurs mélanges,
- de compositions comprenant un polyacide carboxylique et un polyol, de préférence associé à un catalyseur du type sel de métal alcalin d'acide organique phosphoré (décrites dans la demande EP-A- 0 990 727),
- de compositions comprenant un ou plusieurs composés renfermant une fonction carboxylique et/ou une fonction β-hydroxyalkylamide (décrites dans la demande WO-A-93/36368),
- de compositions renfermant soit un acide carboxylique et une alcanolamine, soit une résine préalablement synthétisée à partir d'un acide carboxylique et d'une alcanolamine, et un polymère contenant un groupe carboxylique (décrites dans la demande EP-A-1 164 163),
- de compositions d'encollages préparées en deux étapes consistant à mélanger un anhydride et une amine dans des conditions réactives jusqu'à ce que l'anhydride soit substantiellement solubilisé dans l'amine et/ou ait réagi avec elle, puis à ajouter de l'eau et terminer la réaction (décrites dans la demande EP-A-1 170 265),
- de compositions contenant une résine qui comprend le produit de réaction non polymérique d'une amine avec un premier anhydride et un deuxième anhydride différent du premier (décrites dans la demande EP-A-1 086 932),
- de compositions contenant au moins un polyacide carboxylique et au moins une polyamine,
- de compositions comprenant des coploymères d'acide carboxylique et de monomères contenant des fonctions alcool telles que décrites dans la demande US 2005/038193,
- de compositions comprenant des polyols et des polyacides ou polyanhydridres tels que l'acide maléique, décrites par exemple dans la demande WO 2005/87837 ou dans le brevet US 6706808.
- de composition décrites dans les demandes WO 04/007395, WO 2005/044750, WO 2005/121191, WO 04/094714, WO 04/011519, US 2003/224119, US 2003/224120.

Des résines du type aminoplaste (mélamine-formol ou urée-formol) peuvent également être employées dans le cadre de l'invention.

L'exemple comparatif A ne comprend pas de composés du phosphore et ne comprend donc que le liant à base de résine à titre d'adjuvant.

Pour les autres exemples, les composés du phosphore employés sont au nombre de six. Les trois premiers sont des phosphates ou polyphosphates minéraux assez similaires à ceux décrits dans la demande WO 01/68546 et sont employés dans les exemples comparatifs B, C et D. Ce sont :
- le métaphosphate de sodium ; l'exemple comparatif B en contient une teneur de 0,2%.
- un agent ignifuge du nom commercial « Exolit AP 462 » et produit par la société Clariant GmbH. A base de polyphosphate d'ammonium et de mélamine, il est notamment employé pour améliorer la résistance au feu de polymères (polyuréthanes, résines époxy) et présente une très faible solubilité à l'eau ; l'exemple comparatif C en contient dans une teneur de 0,2%.
- un agent ignifuge du nom commercial « FR CROS 489 » commercialisé par la société Buddenheim (n° CAS 68333-79-9). Ce produit est un polyphosphate d'ammonium contenant 64% de phosphate exprimé sous forme P₂O₅. L'exemple comparatif D en contient 0,2%.

Les trois autres composés du phosphore sont des composés « organophosphorés » employés dans le cadre de la présente invention. Ce sont :
- un agent ignifuge du nom commercial « Exolit OP 550 » et produit par la société Clariant GmbH. A base d'oligomère du type polyester phosphorique, il est surtout employé comme agent de protection des polyuréthanes contre le feu. Les exemples selon l'invention E, F, et G en contiennent respectivement 0,3%, 0,5% et 0,7% par rapport à la masse totale des fibres.
- un agent ignifuge du nom commercial « Exolit OP 560 » et produit par la société Clariant GmbH. A base d'oligomère du type polyester phosphonique, il est surtout employé comme agent de protection des polyuréthanes contre le feu. L'exemple selon l'invention H en contient 0,5%.
- un agent ignifuge de nom commercial « Fyrol PNX » commercialisé par la société Akzo Nobel, contenant 19% de P₂O₅. Il s'agit d'un oligomère du type polyester phosphorique de formule (3) dans laquelle n varie entre 2 et 20, R₆, R₇ et R₈ sont des groupes éthyle, et R₅ est un groupe éthylène (numéro CAS 184538-58-7). L'exemple selon l'invention I en contient 0,8%.

Ces 3 composés comprennent dans leur chaîne principale des atomes de phosphore et des entités carbonées, en particulier de type alkyle.

Parmi d'autres exemples de composés du phosphore selon l'invention figurent les produits Budit 341 ou 3118F commercialisés par la société Buddenheim. Le mélange d'esters phosphoniques cycliques commercialisé sous la marque AMGARD^{®} CT et CU par la société Rhodia est également particulièrement intéressant. Ce produit, utilisé comme retardateur de feu pour les textiles à base de polyester, présente en effet une stabilité plus élevée que le produit Exolit OP 550 à la température de l'étuve, et permet ainsi d'obtenir de meilleures propriétés mécaniques avant vieillissement. Sa teneur en P₂O₅ est d'environ 20%.

Le tableau 2 présente pour l'ensemble de ces essais la résistance mécanique initiale des produits de laine minérale obtenus ainsi que la perte de leur résistance mécanique (en pourcentages relatifs) après vieillissement en autoclave à 105°C sous une pression de 1,5 bars pendant 15 minutes, et pour certains de ces essais l'affaissement à 1000°C, selon le projet de norme "Matériaux isolants : stabilité thermique " (Insulating materials : Thermal stability) susmentionné.

La résistance mécanique est mesurée avant et après vieillissement en autoclave par des essais de traction réalisés sur des éprouvettes en forme d'anneaux découpées dans des produits fibreux d'une densité de 14kg/m³. Selon ce test, deux broches sont introduits au centre de l'anneau et écartées à vitesse constante jusqu'à rupture de l'échantillon. Cette résistance, exprimée en N/g, correspond à la force à rupture rapportée à la masse de l'échantillon. Le test est répété sur 20 échantillons, la moyenne des résultats obtenus étant indiquée sur le tableau.

**Tableau 2**

| | | Résistance mécanique (N/g) | Perte de résistance mécanique après vieillissement accéléré(%) | Affaissement à 1000°C (%) |
|---|---|---|---|---|
| Exemples comparatifs | A | 2,7 | 28% | 89% |
| | B | 2,6 | 44% | 40% |
| | C | 2,3 | 36% | |
| | D | 2,8 | 39% | |
| Exemples selon l'invention | E | 3,1 | 22% | 40% |
| | F | 3,2 | 29% | |
| | G | 3,3 | 17% | |
| | H | 3,1 | 28% | |
| | I | 3,0 | 27% | 30% |

Ces résultats montrent clairement que l'ajout de composés du phosphore tels que ceux décrits dans l'art antérieur (exemples B, C et D) n'améliorent pas ou dégradent les propriétés de résistance mécanique initiale (en sortie d'étuve) et en outre dégradent fortement la variation de ces propriétés dans le temps par rapport au cas où aucun composé phosphoré n'est ajouté (exemple A).

En revanche, l'utilisation de composés du phosphore dans le cadre de la présente invention d'une part améliore les propriétés mécaniques initiales du produit et d'autre part soit ne dégrade pas l'évolution de ces propriétés après vieillissement accéléré (exemples F, H et I) soit même les améliore (exemples E et G).

Sans vouloir être lié par une quelconque théorie scientifique, l'effet bénéfique de l'ajout des composés selon l'invention semble être dû à l'absence de libération de composés acides, tels que l'acide phosphorique et/ou l'anhydride phosphorique pendant le traitement en étuve de polymérisation de la résine du liant et pendant le traitement de vieillissement accéléré du produit fini. Il semble en effet que la libération de composés acides provoque une diminution de l'adhésion entre le liant et les fibres de verre et/ou une attaque de la surface des fibres. Il a d'ailleurs été démontré indépendamment de la présente invention que l'ajout d'une base (telle que MgO) comme adjuvant supplémentaire permet de neutraliser les acides formés durant cette étape de polymérisation du liant et procure des avantages sur l'évolution des propriétés mécaniques dans le temps des produits ainsi formés.

L'effet bénéfique de tous les types de phosphate (exemples comparatifs B ou selon l'invention, E et I) sur la stabilité thermique est également confirmé, l'affaissement à 1000°C étant au moins divisé par deux par rapport à celui des fibres sans composés du phosphate.

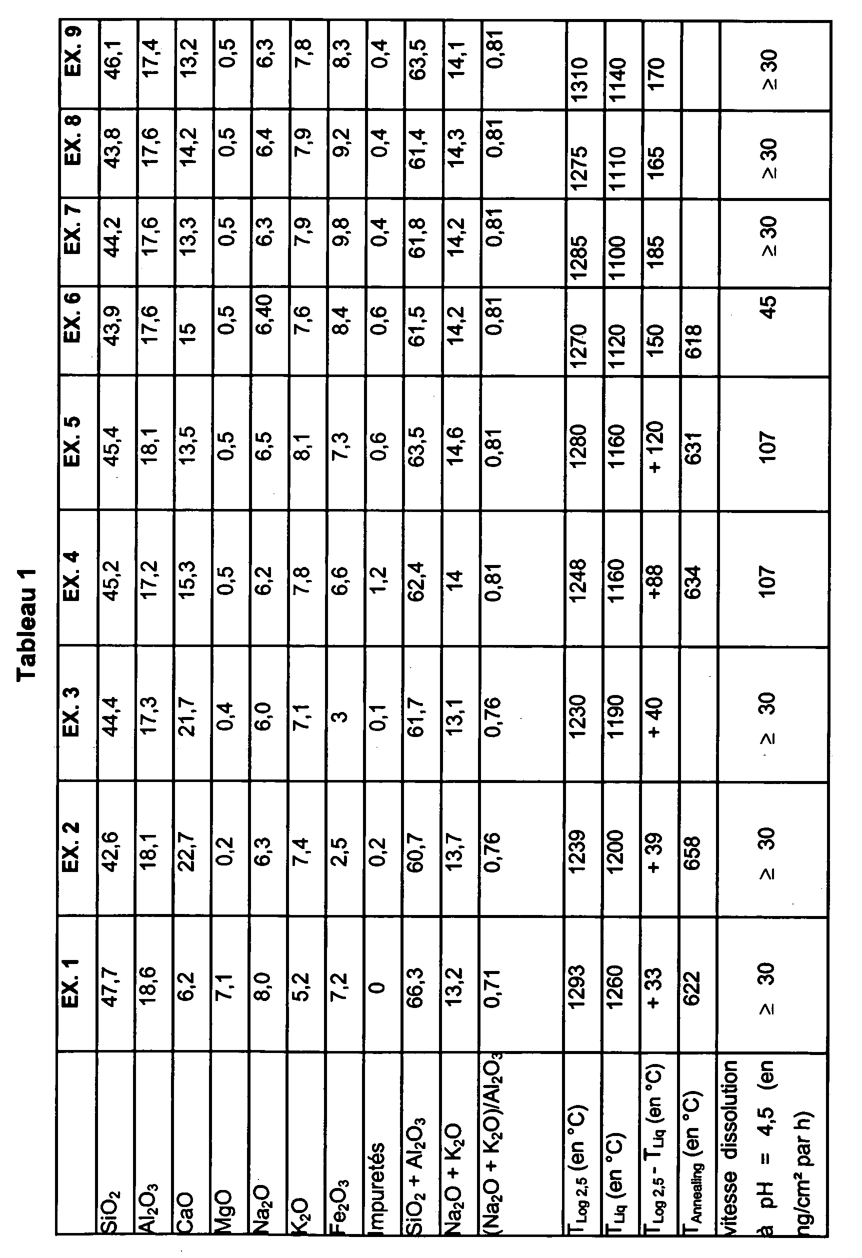

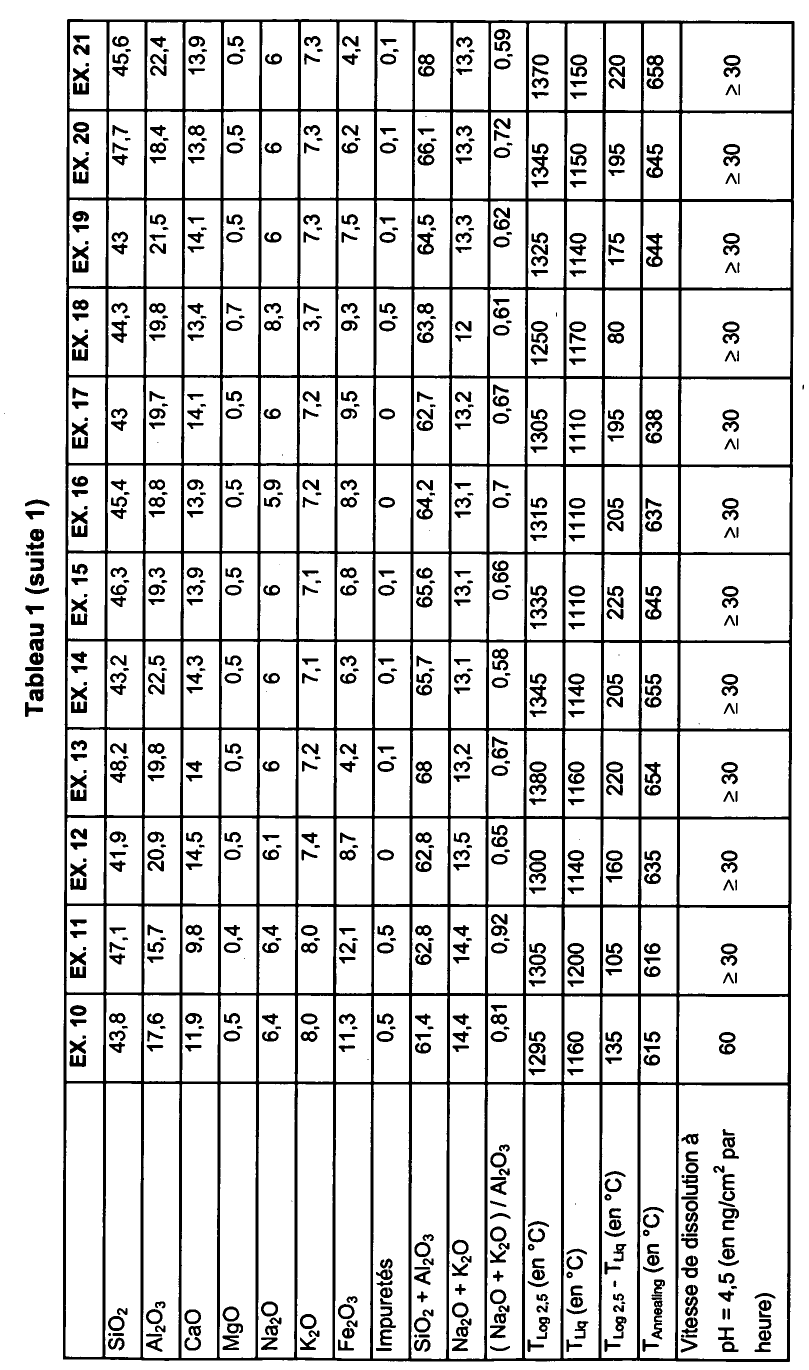

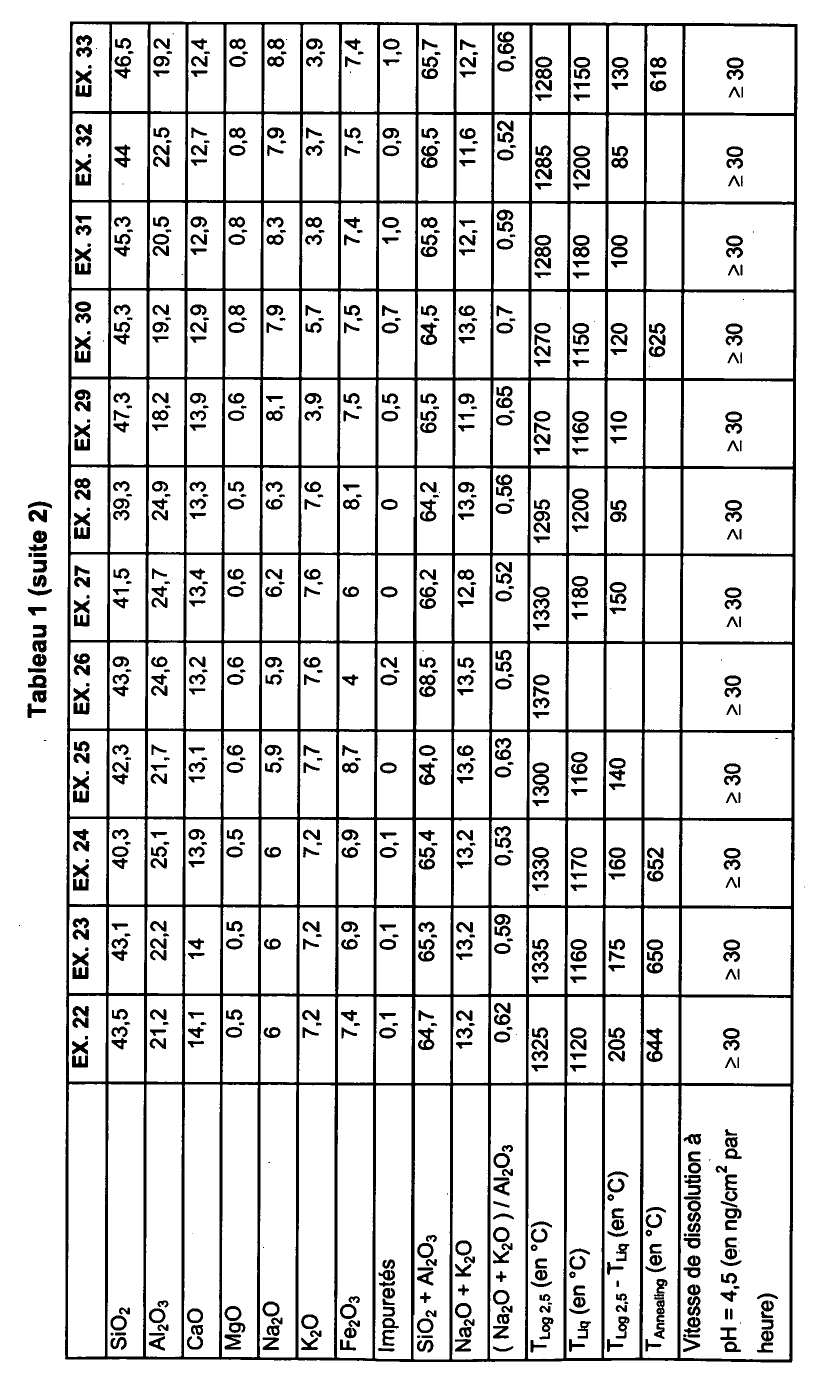

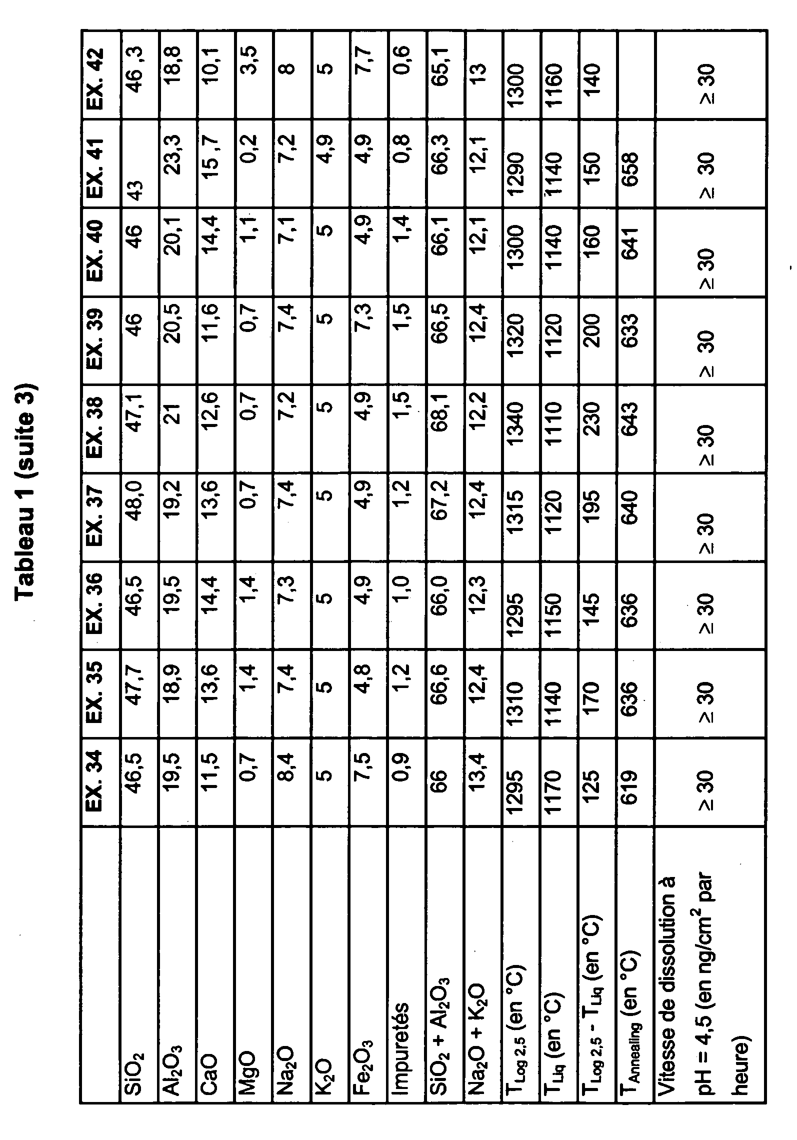

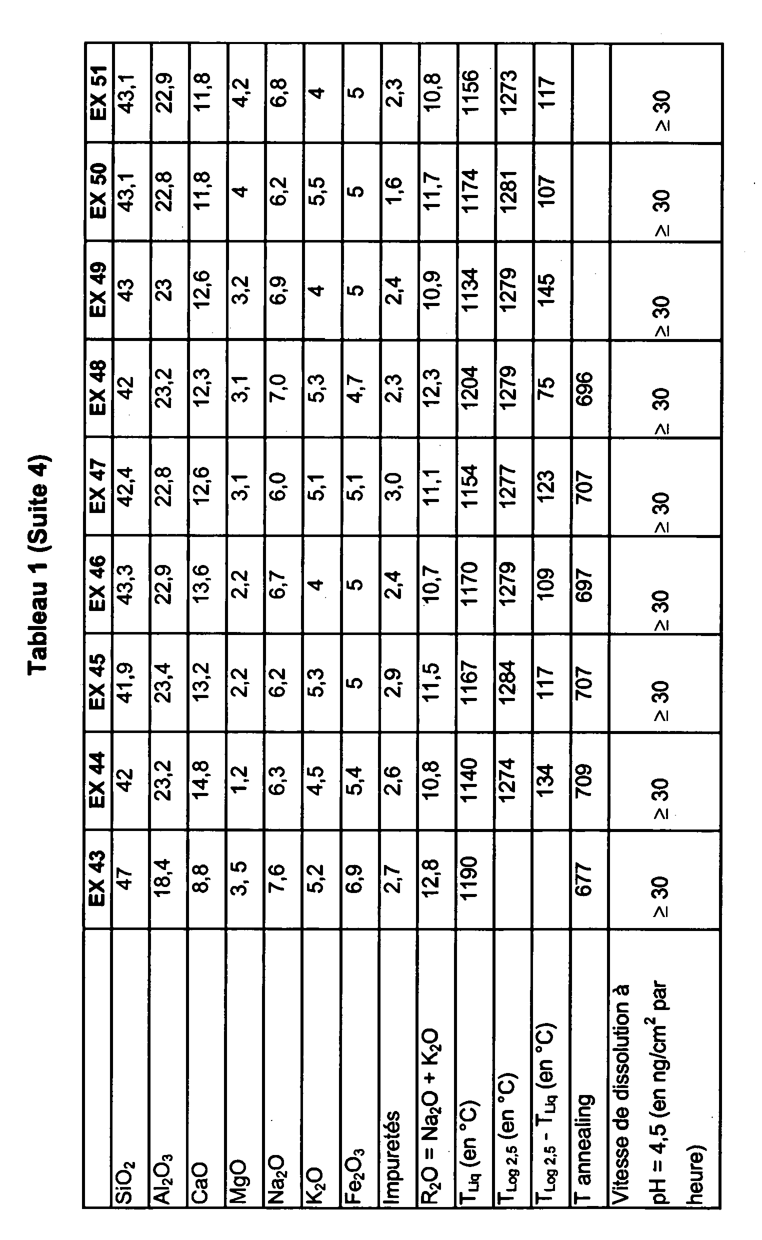

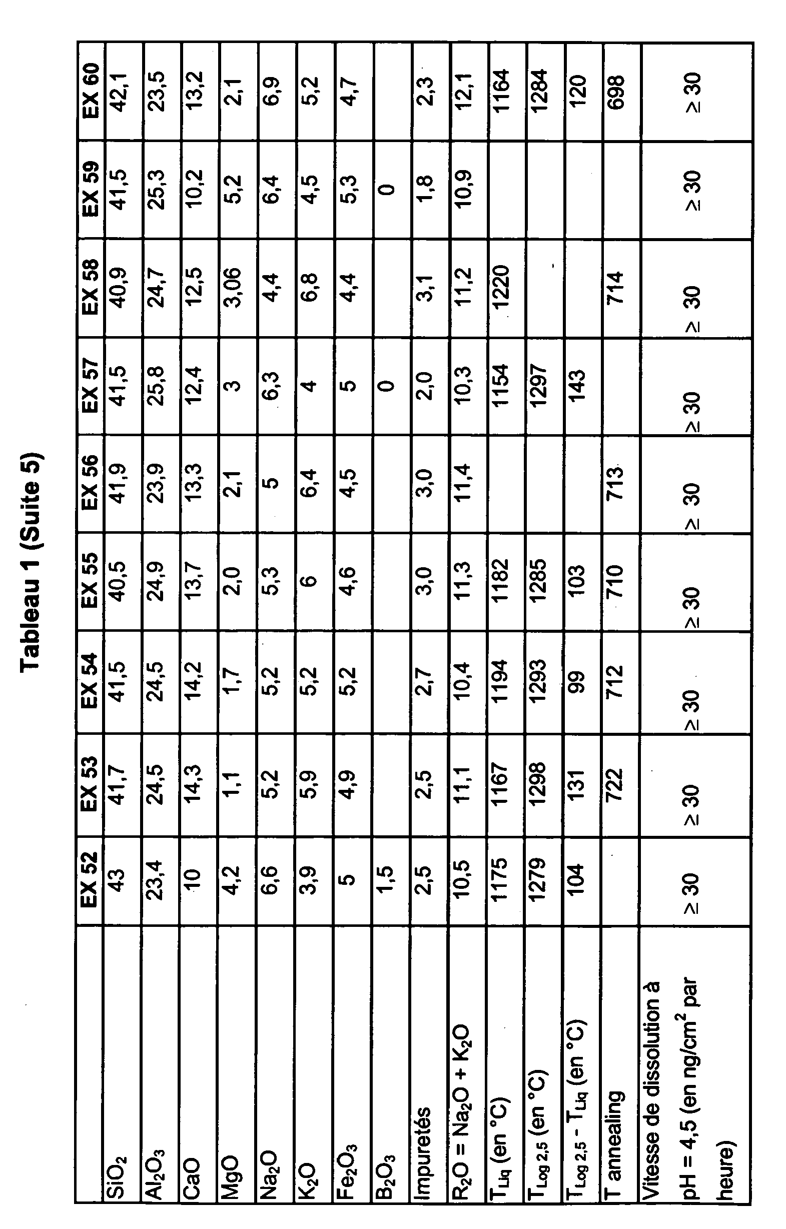

## Revendications

1. Laine minérale, stable thermiquement, susceptible de se dissoudre dans un milieu physiologique, comprenant des fibres dont les constituants sont mentionnés ci-après, selon les pourcentages pondéraux suivants :
| | | | |
|---|---|---|---|
| SiO₂ | 35-60 %, | de préférence | 39-55 % |
| Al₂O₃ | 12-27 %, | -- | 16-25 % |
| CaO | 0-35 %, | -- | 3-25 % |
| MgO | 0-30 %, | -- | 0-15 % |
| Na₂O | 0-17 %, | -- | 6-12 % |
| K₂O | 0-17 %, | -- | 3-12 % |
| R₂O (Na₂O + K₂O) | 10-17 %, | -- | 12-17 % |
| P₂O₅ | 0-5%, | -- | 0-2% |
| Fe₂O₃ | 0-20 %, | | |
| B₂O₃ | 0-8 %, | -- | 0-4 % |
| TiO₂ | 0-3%, | | |
et au moins un composé du phosphore susceptible de réagir à une température inférieure à 1000°C avec lesdites fibres pour former un revêtement à la surface desdites fibres, **caractérisée en ce que** la teneur dudit composé du phosphore, exprimée en masse d'atomes de phosphore, varie de 0,0005 %, notamment plus de 0,01 % à 1%, notamment moins de 0,5 % de la masse totale des fibres, **et en ce qu**'un composé du phosphore est une molécule dans laquelle le ou les atome(s) de phosphore est (sont) lié(s) à au moins un atome de carbone, directement ou par le biais d'un atome d'oxygène.

2. Laine minérale selon la revendication 1, comprenant au moins un composé du phosphore choisi parmi :
a) une molécule contenant un unique atome de phosphore lié à au moins un atome de carbone, uniquement par le biais d'un atome d'oxygène.
b) une molécule contenant un unique atome de phosphore lié directement à au moins un atome de carbone.

3. Laine minérale selon la revendication précédente, comprenant au moins un composé du phosphore (a) choisi parmi : un mono-, di- ou tri-ester phosphorique, ou un ester phosphonique ou phosphinique non-substitué, les groupes carbonés de ces esters étant des composés alkyles, aryles, acyles ou hydroxyalkyles, pouvant éventuellement être de nature oligomérique ou polymérique et/ou contenir un ou plusieurs hétéroatomes choisis parmi N, O ou S.

4. Laine minérale selon la revendication 2, comprenant au moins un composé du phosphore (b) choisi parmi un ester ou un acide phosphonique ou phosphinique au moins partiellement substitué ou un mono-, di- ou tri-oxyde de phosphine, les différents groupes carbonés de ces composés étant des composés alkyles, aryles, acyles ou hydroxyalkyles, pouvant éventuellement être de nature oligomérique ou polymérique et/ou contenir un ou plusieurs hétéroatomes choisis parmi N, O ou S.

5. Laine minérale selon la revendication 1, comprenant au moins un composé du phosphore qui est une molécule constituée de plusieurs composés de type (a) ou (b) selon les revendications 2 à 4, identiques ou différents, liés entre eux par des liaisons covalentes.

6. Laine minérale selon la revendication précédente, comprenant au moins un composé du phosphore qui est une molécule oligomère ou polymère, dont le nombre de motifs constitutifs est préférentiellement compris entre 2 et 100, notamment 2 et 50, voire entre 2 et 10.

7. Laine minérale selon la revendication 5 ou 6, comprenant au moins un composé du phosphore qui contient une majorité d'atomes de phosphore liés entre eux par l'intermédiaire d'une entité carbonée.

8. Laine minérale selon la revendication précédente, comprenant au moins un composé du phosphore qui peut être représenté selon la formule générale (1) suivante : 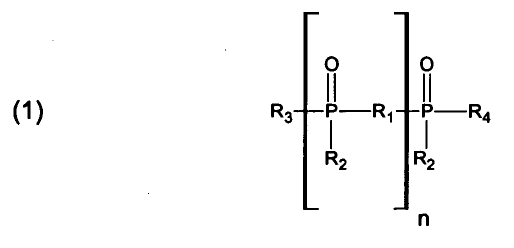 dans laquelle :
- n est compris entre 1 et 100, de préférence entre 1 et 50, notamment entre 2 et 10,
- les substituants R₁ à R₄ sont des entités majoritairement carbonées identiques ou différentes, de préférence du type alkyle, aryle, acyle ou hydroxyalkyle éventuellement ramifiés, pouvant éventuellement être de nature oligomérique ou polymérique et/ou contenir un ou plusieurs hétéroatomes choisis parmi N, O, S ou P.

9. Laine minérale selon la revendication précédente, comprenant au moins un composé du phosphore qui est un oligomère ou un polymère du type polyester phosphonique de formule générale (2) suivante : 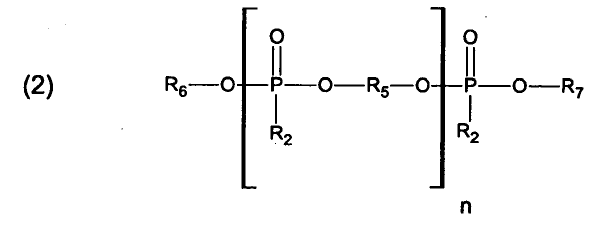 dans lequel :
- la longueur n de la chaîne est comprise entre 1 et 100, de préférence entre 1 et 50, notamment entre 2 et 10.
- les substituants R₂ et R₅ à R₇ sont des entités majoritairement carbonées identiques ou différentes, de préférence du type alkyle, aryle, acyle ou hydroxyalkyle éventuellement ramifiés, pouvant éventuellement être de nature oligomérique ou polymérique et/ou contenir un ou plusieurs hétéroatomes choisis parmi N, O, S ou P.

10. Laine minérale selon la revendication 8, comprenant au moins un composé du phosphore qui est un oligomère ou un polymère du type polyacide ou polyester phosphorique de formule générale (3) suivante : 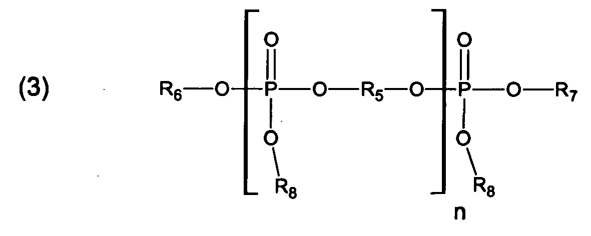 dans lequel:
- la longueur n de la chaîne est comprise entre 1 et 100, de préférence entre 1 et 50, notamment entre 2 et 10.
- les substituants R₅ à R₈ sont des entités majoritairement carbonées identiques ou différentes, de préférence du type alkyle, aryle, acyle ou hydroxyalkyle éventuellement ramifiés, pouvant éventuellement être de nature oligomérique ou polymérique et/ou contenir un ou plusieurs hétéroatomes choisis parmi N, O, S ou P.

11. Laine minérale selon l'une des revendications 4 à 10, comprenant au moins un composé du phosphore qui est obtenu par une réaction d'estérification ou de transestérification entre des acides ou esters respectivement phosphoniques et phosphoriques et des polyols (en particulier diols), des polyacides (en particulier diacides) ou des composés époxy.

12. Laine minérale selon la revendication précédente, comprenant au moins un composé du phosphore qui est obtenu par réaction entre de la mélasse et des acides ou esters phosphoriques ou phosphoniques.

13. Laine minérale selon l'une des revendications précédentes, comprenant des fibres dont les constituants sont mentionnés ci-après, selon les pourcentages pondéraux suivants :
| | | | |
|---|---|---|---|
| SiO₂ | 39-55 %, | de préférence | 40-52 % |
| Al₂O₃ | 16-27 %, | -- | 16-25 % |
| CaO | 3-35 %, | -- | 10-25 % |
| MgO | 0-15 %, | -- | 0-10 % |
| Na₂O | 0-15 %, | -- | 6-12 % |
| K₂O | 0-15 %, | -- | 3-12 % |
| R₂O (Na₂O + K₂O) | 10-17 %, | -- | 12-17 % |
| P₂O₅ | 0-5%, | -- | 0-2% |
| Fe₂O₃ | 0-15 %, | | |
| B₂O₃ | 0-8 %, | -- | 0-4% |
| TiO₂ | 0-3%, | | |
MgO étant compris entre 0 et 5 %, notamment entre 0 et 2 %, lorsque R₂O ≤ 13,0 %.

14. Laine minérale selon l'une des revendications précédentes, comprenant des fibres dont les constituants sont mentionnés ci-après, selon les pourcentages pondéraux suivants :
| | | |
|---|---|---|
| SiO₂ | 39-55%, | de préférence 40-52% |
| Al₂O₃ | 16-27%, | de préférence 16-26% |
| CaO | 6-20%, | de préférence 8-18% |
| MgO | 1-5%, | de préférence 1-4,9% |
| Na₂O | 0-15%, | de préférence 2-12% |
| K₂O | 0-15%, | de préférence 2-12% |
| R₂O (Na₂O + K₂O) | 10-14,7%, | de préférence 10-13,5% |
| P₂O₅ | 0-3%, | notamment 0-2% |
| Fe₂O₃ (fer total) | 1,5-15%, | notamment 3,2-8% |
| B₂O₃ | 0-2%, | de préférence 0-1 % |
| TiO₂ | 0-2%, | de préférence 0,4-1% |

15. Laine minérale selon l'une des revendications précédentes, telle que la teneur en CaO est comprise entre 9,5 et 20%, de préférence entre 10 et 18%.

16. Laine minérale selon l'une des revendications précédentes, contenant de 20 à 25% d'alumine.

17. Laine minérale selon l'une des revendications précédentes, contenant au moins 2% , notamment de l'ordre de 2 à 5%, de MgO, quand l'alumine est présente à raison de moins de 22%, notamment de 17 à 22%, et contenant de 1 à 4%, de préférence de 1 à 2%, de MgO quand l'alumine est présente à raison d'au moins 22 % en poids.

18. Laine minérale selon l'une des revendications précédentes, telle que le taux d'alcalin est de préférence inférieur ou égal à 13,0 % , notamment de l'ordre de 10 à 12,5 %, en particulier 12% ou moins.

19. Laine minérale selon l'une des revendications précédentes, telle que le rapport molaire R₂O / Al₂O₃ est inférieur à 0,9, notamment d'au plus 0,8, en particulier d'au plus 0,75.

20. Laine minérale selon l'une des revendications précédentes, contenant de 2 à 6% d'oxyde de fer.

21. Laine minérale selon l'une des revendications précédentes, contenant 1 % ou moins d'oxyde de titane.

22. Laine minérale selon l'une des revendications précédentes, telle que les fibres présentent une vitesse de dissolution d'au moins 30 ng/cm² par heure mesurée à pH 4,5.

23. Laine minérale selon l'une des revendications précédentes, selon laquelle le verre correspondant aux fibres peut être fibré par centrifugation interne.

24. Laine minérale selon l'une des revendications précédentes, selon laquelle le revêtement susceptible de se former à la surface des fibres est constitué essentiellement de phosphate d'alcalino-terreux.

25. Laine minérale selon la revendication précédente, selon laquelle le phosphate d'alcalino-terreux est un phosphate de chaux.

26. Procédé d'obtention des laines minérales selon l'une des revendications précédentes comprenant une étape de formage des fibres puis une étape d'apport, notamment par pulvérisation ou imprégnation d'une solution, d'au moins un composé du phosphore sur la surface desdites fibres.

27. Utilisation de la laine minérale selon l'une quelconque des revendications de laine minérale précédentes dans des systèmes constructifs résistants au feu.

28. Produit d'isolation thermique et/ou phonique comprenant au moins une laine minérale selon l'une des revendications de laine minérale précédentes.

## Claims

1. A thermally stable mineral wool capable of dissolving in a physiological medium, which comprises fibers whose constituents are mentioned below, in the following percentages by weight:
| | | | |
|---|---|---|---|
| SiO₂ | 35-60%, | preferably | 39-55% |
| Al₂O₃ | 12-27%, | ..... | 16-25% |
| CaO | 0-35%, | ..... | 3-25% |
| MgO | 0-30%, | ...... | 0-15% |
| Na₂O | 0-17%, | ...... | 6-12% |
| K₂O | 0-17%, | ...... | 3-12% |
| R₂O(Na₂O + K₂O) | 10-17%, | ...... | 12-17% |
| P₂O₅ | 0-5%, | ...... | 0-2% |
| Fe₂O₃ | 0-20%, | | |
| B₂O₃ | 0-8%, | ...... | 0-4% |
| TiO₂ | 0-3%, | | |
and at least one phosphorus compound capable of reacting at a temperature below 1000°C with said fibers in order to form a coating on the surface of said fibers, **characterized in that** the content, expressed by weight of phosphorus atoms varies from 0.0005%, especially more than 0.01% to 1%, but especially less than 0.5% of the total mass of the fibers, and **in that** a phosphorus compound being a molecule in which the phosphorus atom(s) is (are) linked to at least one carbon atom, directly or via an oxygen atom.

2. The mineral wool as claimed in claim 1, comprising at least one phosphorus compound chosen from:
a) a molecule containing a single phosphorus atom linked to at least one carbon atom, strictly by means of an oxygen atom;
b) a molecule containing a single phosphorus atom linked directly to at least one carbon atom.

3. The mineral wool as claimed in the previous claim, comprising at least one phosphorus compound (a) chosen from: a mono-, di- or tri-phosphoric ester, or an unsubstituted phosphonic or phosphinic ester, the carbon-based groups of these esters being alkyl, aryl, acyl or hydroxyalkyl compounds, which may possibly be of oligomeric or polymeric nature and/or contain one or more heteroatoms chosen from N, O or S.

4. The mineral wool as claimed in claim 2, comprising at least one phosphorus compound (b) chosen from an at least partially substituted phosphonic or phosphinic ester or acid, or a mono-, di- or tri-phosphine oxide, the various carbon-based groups of these compounds being alkyl, aryl, acyl or hydroxyalkyl compounds, which may possibly be of oligomeric or polymeric nature and/or contain one or more heteroatoms chosen from N, O or S.

5. The mineral wool as claimed in claim 1, comprising at least one phosphorus compound that is a molecule made up of several compounds of type (a) or (b) as claimed in claims 2 to 4, that are identical or different, linked together by covalent bonds.

6. The mineral wool as claimed in the previous claim, comprising at least one phosphorus compound that is an oligomer or polymer molecule, of which the number of constituent units is preferentially between 2 and 100, especially 2 and 50, or even between 2 and 10.

7. The mineral wool as claimed in claim 5 or 6, comprising at least one phosphorus compound that contains predominantly phosphorus atoms linked together via a carbon-based entity.

8. The mineral wool as claimed in the previous claim, comprising at least one phosphorus compound that may be represented according to the general formula (1) below: 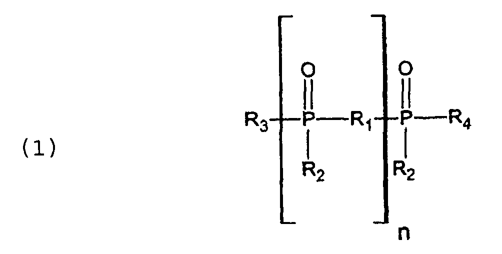 in which:
- n is between 1 and 100, preferably between 1 and 50, especially between 2 and 10;
- the substituents R₁ to R₄ are identical or different, predominantly carbon-based entities, preferably of possibly branched alkyl, aryl, acyl or hydroxyalkyl type, which may possibly be of oligomeric or polymeric nature and/or contain one or more heteroatoms chosen from N, O, S or P.

9. The mineral wool as claimed in the previous claim, comprising at least one phosphorus compound that is a phosphonic polyester-type oligomer or polymer of general formula (2) below: 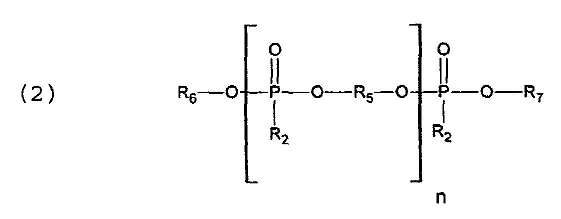 in which:
- the chain length n is between 1 and 100, preferably between 1 and 50, especially between 2 and 10; and
- the substituents R₂ and R₅ to R₇ are identical or different, predominantly carbon-based entities, preferably of possibly branched alkyl, aryl, acyl or hydroxyalkyl type, which may possibly be of oligomeric or polymeric nature and/or contain one or more heteroatoms chosen from N, O, S or P.

10. The mineral wool as claimed in claim 8, comprising at least one phosphorus compound that is a phosphoric polyacid or polyester-type oligomer or polymer of general formula (3) below: 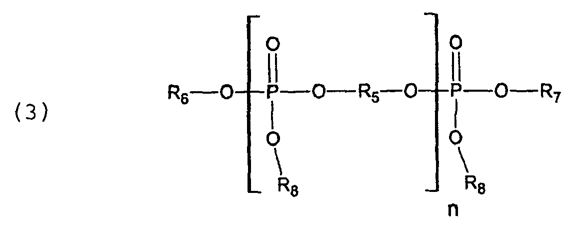 in which:
- the chain length n is between 1 and 100, preferably between 1 and 50, especially between 2 and 10;
- the substituents R₅ to R₈ are identical or different, predominantly carbon-based entities, preferably of possibly branched alkyl, aryl, acyl or hydroxyalkyl type, which may possibly be of oligomeric or polymeric nature and/or contain one or more heteroatoms chosen from N, O, S or P.

11. The mineral wool as claimed in one of claims 4 to 10, comprising at least one phosphorus compound that is obtained by an esterification or transesterification reaction between acids or esters, that are phosphonic and phosphoric respectively, and polyols (in particular diols), polyacids (in particular diacids) or epoxy compounds.

12. The mineral wool as claimed in the previous claim, comprising at least one phosphorus compound that is obtained by reaction between molasses and the phosphoric or phosphonic acids or esters.

13. A mineral wool as claimed in one of the preceding claims, comprising fibers who constituents are mentioned below, the following percentages by weight:
| | | | |
|---|---|---|---|
| SiO₂ | 39-55%, | preferably | 40-52% |
| Al₂O₃ | 16-27%, | ...... | 16-25% |
| CaO | 3-35%, | ...... | 10-25% |
| MgO | 0-15%, | ...... | 0-10% |
| Na₂O | 0-15%, | ...... | 6-12% |
| K₂O | 0-15%, | ...... | 3-12% |
| R₂O (Na₂O + K₂O) | 10-17%, | ...... | 12-17% |
| P₂O₅ | 0-5%, | ...... | 0-2% |
| Fe₂O₃ | 0-15%, | | |
| B₂O₃ | 0-8%, | ...... | 0-4% |
| TiO₂ | 0-3%, | | |
MgO being between 0 and 5%, especially between 0 and 2% when R₂O≤13.0%.

14. The mineral wool as claimed in one of the preceding claims, comprising fibers whose constituents are mentioned below, in the following percentages by weight:
| | | | |
|---|---|---|---|
| SiO₂ | 39-55%, | preferably | 40-52% |
| Al₂O₃ | 16-27%, | ...... | 16-26% |
| CaO | 6-20%, | ...... | 8-18% |
| MgO | 1-5%, | ...... | 1-4.9% |
| Na₂O | 0-15%, | ...... | 2-12% |
| K₂O | 0-15%, | ...... | 2-12% |
| R₂O (Na₂O + K₂O) | 10-14.7%, | ...... | 10-13.5% |
| P₂O₅ | 0-3%, | especially | 0-2% |
| Fe₂O₃ (Total Iron) | 1.5-15%, | ...... | 3.2-8% |
| B₂O₃ | 0-2%, | preferably | 0-1% |
| TiO₂ | 0-2% | ...... | 0.4-1%. |

15. The mineral wool as claimed in one of the preceding claims, such that the CaO content is between 9.5 and 20%, preferably between 10 and 18%.

16. The mineral wool as claimed in one of the preceding claims, containing 20 to 25% alumina.

17. A mineral wool as claimed in one of the preceding claims, containing at least 2%, especially around 2 to 5%, MgO when the alumina is present in an amount of less than 22%, especially 17 to 22%, and containing 1 to 4%, preferably 1 to 2%, MgO when the alumina is present in an amount of at least 22% by weight.

18. The mineral wool as claimed in one of the preceding claims, such that the alkaline metal content is preferably less than or equal to 13.0%, especially around 10 to 12.5%, in particular 12% or less.

19. The mineral wool as claimed in one of the preceding claims, such that the R₂O/Al₂O₃ molar ratio is less than 0.9, especially at most 0.8, in particular at most 0.75.

20. The mineral wool as claimed in one of the preceding claims, containing 2 to 6% iron oxide.

21. The mineral wool as claimed in one of the preceding claims, containing 1% titanium oxide or less.

22. The mineral wool as claimed in one of the preceding claims, such that the fibers have a rate of dissolution of at least 30 ng/cm² per hour measured at pH 4.5.

23. The mineral wool as claimed in one of the preceding claims, in which the glass corresponding to the fibers may be fiberized by the internal centrifugal process.

24. The mineral wool as claimed in one of the preceding claims, in which the coating that can be formed on the surface of the fibers essentially consists of an alkaline-earth metal phosphate.

25. The mineral wool as claimed in the preceding claim, in which the alkaline-earth metal phosphate is a lime phosphate.

26. A process for obtaining mineral wool as claimed in one of the preceding claims which includes a step of fiber-forming followed by a step of supplying, especially by spraying or impregnation of a solution, at least one phosphorus compound onto the surface of said fibers.

27. The use of the mineral wool as claimed in any one of the preceding mineral wool claims in fire-resistant structural systems.

28. A thermal and/or acoustic insulation product comprising at least one mineral wool as claimed in one of the preceding mineral wool claims.

## Patentansprüche

1. Hitzefeste Mineralwolle, die in der Lage ist, sich in einem physiologischen Milieu zu zersetzen, umfassend Fasern mit folgenden Bestandteilen, ausgedrückt in Gewichtsprozent:
| | | | |
|---|---|---|---|
| SiO₂ | 35-60%, | bevorzugt | 39-55% |
| Al₂O₃ | 12-27%, | - | 16-25% |
| CaO | 0-35%, | - | 3-25% |
| MgO | 0-30%, | - | 0-15% |
| Na₂O | 0-17%, | - | 6-12% |
| K₂O | 0-17%, | - | 3-12% |
| R₂O (Na₂O+K₂O) | 0-17%, | - | 12-17% |
| P₂O₅ | 0-5%, | - | 0-2% |
| Fe₂O₃ | 0-20%, | | |
| B₂O₃ | 0-8%, | - | 0-4% |
| TiO₂ | 0-3%, | | |
und wenigstens eine Phosphorverbindung, die in der Lage ist, bei einer Temperatur von weniger als 1000°C mit den Fasern zu reagieren, um eine Beschichtung auf der Oberfläche der Fasern zu bilden, **dadurch gekennzeichnet, dass** der Gehalt der Phosphorverbindung, ausgedrückt in der Atommasse von Phosphor, von 0,0005%, insbesondere von mehr als 0,01% bis 1%, insbesondere bis weniger als 0,5% der Gesamtmasse der Fasern variiert und **dadurch**, dass eine Phosphorverbindung ein Molekül ist, in dem das oder die Phosphoratom(e) direkt oder über ein Sauerstoffatom mit wenigstens einem Kohlenstoffatom verbunden ist (sind).

2. Mineralwolle nach Anspruch 1, umfassend wenigstens eine Phosphorverbindung ausgewählt aus:
a) einem Molekül, enthaltend ein einziges Phosphoratom, dass ausschließlich über ein Sauerstoffatom an wenigstens ein Kohlenstoffatom gebunden ist.
b) einem Molekül, enthaltend ein einziges Phosphoratom, dass direkt an wenigstens ein Kohlenstoffatom gebunden ist.

3. Mineralwolle nach dem vorhergehenden Anspruch, umfassend wenigstens eine Phosphorverbindung (a) ausgewählt aus: Phosphormonoester, -diester oder triester, oder einem Phosphonester oder einem nichtsubstituierten Phosphinester, wobei die Kohlenstoffgruppen dieser Ester Alkylverbindungen, Arylverbindungen, azyklische Verbindungen oder Hydroxyalkylverbindungen sind, wobei sie eventuell oligomerer oder polymerer Art sein können und/oder ein oder mehrere Heteroatome, ausgewählt aus N, O oder S, enthalten können.

4. Mineralwolle nach Anspruch 2, umfassend wenigstens eine Phosphorverbindung (b) ausgewählt aus einem Phosphon- oder Phosphinester oder einer Phosphon-oder Phosphinsäure, die wenigstens teilweise substituiert sind, oder einem Phosphinmonooxid, -dioxid oder -trioxid, wobei die verschiedenen Kohlenstoffgruppen dieser Verbindungen Alklyverbindungen, Arylverbindungen, Acylverbindungen oder Hydroxyalkylverbindungen sind, wobei sie eventuell oligomerer oder polymerer Art sein können und/oder ein oder mehrere Heteroatome, ausgewählt aus N, O oder S, enthalten können.

5. Mineralwolle nach Anspruch 1, umfassend wenigstens eine Phosphorverbindung, die ein Molekül ist, das aus mehreren Verbindungen vom Typ (a) oder (b) gemäß den Ansprüchen 2 bis 4 gebildet ist, die gleich oder verschieden sind, und die kovalent miteinander verbunden sind.

6. Mineralwolle nach dem vorhergehenden Anspruch, umfassend wenigstens eine Phosphorverbindung, die ein oligomeres oder polymeres Molekül ist, wobei die Anzahl der Bausteine bevorzugt zwischen 2 und 100, insbesondere 2 und 50 und insbesondere zwischen 2 und 10 liegt.

7. Mineralwolle nach Anspruch 5 oder 6, umfassend wenigstens eine Phosphorverbindung, die eine Mehrzahl von Phosphoratomen enthält, die mittels einer Kohlenstoffeinheit miteinander verbunden sind.

8. Mineralwolle nach dem vorherigen Anspruch, umfassend wenigstens eine Phosphorverbindung, die gemäß der folgenden allgemeinen Formel (1) dargestellt werden kann: 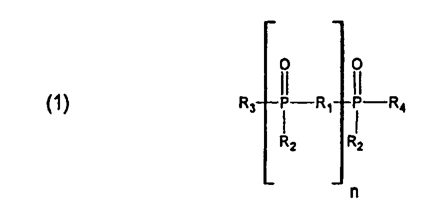 wobei:
- n eine Zahl von 1 bis 100, bevorzugt von 1 bis 50, insbesondere von 2 bis 10 ist,
- die Substituenten R₁ bis R₄ überwiegend kohlenstoffhaltige Reste sind, die gleich oder verschieden sein können, bevorzugt vom Alkyl-, Aryl-, Acyl- oder Hydroxalkyltyp, die verzweigt sein können, wobei sie eventuell von oligomerer oder polymerer Art sein können und/oder ein oder mehrere Heteroatome, ausgewählt aus N, O, S oder P, enthalten können.

9. Mineralwolle nach dem vorhergehenden Anspruch, umfassend wenigstens eine Phosphorverbindung, die ein Oligomer oder ein Polymer vom Phosphonpolyestertyp mit der folgenden allgemeinen Formel (2) ist: 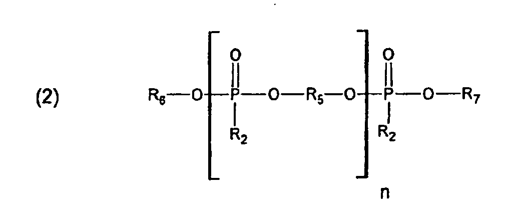 wobei:
- die Länge n der Kette 1 bis 100, bevorzugt 1 bis 50, insbesondere 2 bis 10 ist.
- die Substituenten R₂ und R₅ bis R₇ überwiegend kohlenstoffhaltige Reste sind, die gleich oder verschieden sein können, bevorzugt vom Alkyl-, Aryl-, Acyl-oder Hydroxalkyltyp, die verzweigt sein können, wobei sie eventuell von oligomerer oder polymerer Art sein können und/oder ein oder mehrere Heteroatome, ausgewählt aus N, O, S oder P, enthalten können.

10. Mineralwolle nach Anspruch 8, umfassend wenigstens eine Phosphorverbindung, die ein Oligomer oder ein Polymer vom Phosphorpolysäuren- oder Phosphorpolyestertyp mit der folgenden allgemeinen Formel (3) ist: 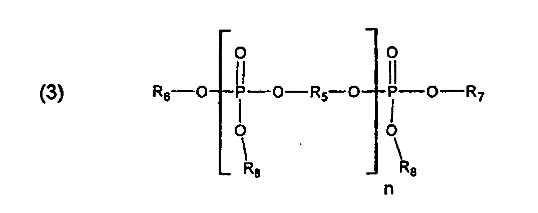 wobei:
- die Länge n der Kette 1 bis 100, bevorzugt 1 bis 50, insbesondere 2 bis 10 ist.
- die Substituenten R₅ bis R₈ überwiegend kohlenstoffhaltige Reste sind, die gleich oder verschieden sein können, bevorzugt vom Alkyl-, Aryl-, Acyl- oder Hydroxalkyltyp, die verzweigt sein können, wobei sie eventuell von oligomerer oder polymerer Art sein können und/oder ein oder mehrere Heteroatome, ausgewählt aus N, O, S oder P, enthalten können.

11. Mineralwolle nach einem der Ansprüche 4 bis 10, umfassend wenigstens eine Phosphorverbindung, welche mittels einer Veresterungs- oder Transveresterungsreaktion zwischen Phosphon- oder Phosphinsäuren bzw. Phosphon- oder Phosphinestern und Polyolen (insbesondere Diolen), Polysäuren (insbesondere Disäuren) oder Expoxyverbindungen erhalten wird.

12. Mineralwolle nach dem vorhergehenden Anspruch, umfassend wenigstens eine Phosphorverbindung, die mittels einer Reaktion zwischen der Melasse und den Phosphon- oder Phosphinsäuren bzw. Phosphon- oder Phosphinestern erhalten wird.

13. Mineralwolle nach einem der vorhergehenden Ansprüche, umfassend Fasern mit folgenden Bestandteilen, ausgedrückt in Gewichtsprozent:
| | | | |
|---|---|---|---|
| SiO₂ | 39-55%, | bevorzugt | 40-52% |
| Al₂O₃ | 16-27%, | - | 16-25% |
| CaO | 3-35%, | - | 10-25% |
| MgO | 0-15%, | - | 0-10% |
| Na₂O | 0-15%, | - | 6-12% |
| K₂O | 0-15%, | - | 3-12% |
| R₂O (Na₂O+K₂O) | 10-17%, | - | 12-17% |
| P₂O₅ | 0-5%, | - | 0-2% |
| Fe₂O₃ | 0-15%, | | |
| B₂O₃ | 0-8%, | - | 0-4% |
| TiO₂ | 0-3%, | | |
wobei der MgO-Gehalt zwischen 0 und 5%, insbesondere zwischen 0 und 2% liegt, wenn R₂O ≤ 13%.

14. Mineralwolle nach einem der vorhergehenden Ansprüche, umfassend Fasern mit folgenden Bestandteilen weiter unten angeführt werden, ausgedrückt in Gewichtsprozent:
| | | |
|---|---|---|
| SiO₂ | 39-55%, | bevorzugt 40-52% |
| Al₂O₃ | 16-27%, | bevorzugt 16-26% |
| CaO | 6-20%, | bevorzugt 8-18% |
| MgO | 1-5%, | bevorzugt 1-4,9% |
| Na₂O | 0-15%, | bevorzugt 2-12% |
| K₂O | 0-15%, | bevorzugt 2-12% |
| R₂O (Na₂O+K₂O) | 10-14,7%, | bevorzugt 10-13,5% |
| P₂O₅ | 0-3 %, | insbesondere 0-2% |
| Fe₂O₃ (Gesamteisen) | 1,5-15%, | insbesondere 3,2-8% |
| B₂O₃ | 0-2%, | bevorzugt 0-1% |
| TiO₂ | 0-2%, | bevorzugt 0,4-1 % |

15. Mineralwolle nach einem der vorhergehenden Ansprüche, wobei der CaO-Gehalt 9,5 bis 20%, bevorzugt 10 bis 18% ist.

16. Mineralwolle nach einem der vorhergehenden Ansprüche, enthaltend 20 bis 25% Aluminium.

17. Mineralwolle nach einem der vorhergehenden Ansprüche, enthaltend wenigstens 2%, insbesondere etwa 2 bis 5% MgO, wenn weniger als 22% insbesondere 17 bis 22% Aluminium enthalten ist und enthaltend 1 bis 4%, bevorzugt 1 bis 2% MgO, wenn weniger als 22% Aluminium enthalten ist, ausgedrückt in Gewichtsprozent.

18. Mineralwolle nach einem der vorhergehenden Ansprüche, wobei der Alkalianteil bevorzugt kleiner oder gleich 13% ist, vorzugsweise etwa 10 bis 12,5%, insbesondere 12% oder weniger ist.

19. Mineralwolle nach einem der vorherigen Ansprüche, wobei das Molverhältnis R₂O/Al₂O₃ kleiner 0,9 ist, insbesondere höchstens 0,8, insbesondere höchstens 0,75 ist.

20. Mineralwolle nach einem der vorhergehenden Ansprüche, enthaltend 2 bis 6% Eisenoxid.

21. Mineralwolle nach einem der vorhergehenden Ansprüche, enthaltend 1% oder weniger Titanoxid.

22. Mineralwolle nach einem der vorhergehenden Ansprüche, wobei die Fasern eine Auflösungsgeschwindigkeit von wenigstens 30 ng/cm² pro Stunde, gemessen bei pH 4,5 haben.

23. Mineralwolle nach einem der vorhergehenden Ansprüche, wobei das Glas zur Herstellung von Fasern durch Zentrifugation zerfasert werden kann.

24. Mineralwolle nach einem der vorhergehenden Ansprüche, wobei die Beschichtung, die in der Lage ist, sich auf der Faseroberfläche zu bilden, im Wesentlichen aus Erdalkaliphosphat gebildet ist.

25. Mineralwolle nach dem vorhergehenden Anspruch, wobei das Erdalkaliphosphat ein Calciumphosphat ist.

26. Verfahren zur Herstellung von Mineralwolle nach einem der vorhergehenden Ansprüche, umfassend eine Faserbildungsphase, gefolgt von einer Aufbringungsphase, insbesondere durch Aufsprühen einer Lösung auf die Faseroberfläche oder Imprägnierung der Faseroberfläche mit einer Lösung aus wenigstens einer Phosphorverbindung.

27. Verwendung der Mineralwolle nach einem der vorhergehenden Mineralwollansprüche in feuerfesten Konstruktionssystemen.

28. Wärmedämm- und/oder Schalldämmprodukt, umfassend wenigstens eine Mineralwolle nach einem der vorhergehenden Mineralwollansprüche.
